# EUROPÄISCHE PATENTSCHRIFT

(11) **EP 3 997 537 B1**
(45) Veröffentlichungstag und Bekanntmachung des Hinweises auf die Patenterteilung: **06.11.2024**
(21) Anmeldenummer: 20736634.5
(22) Anmeldetag: 01.07.2020
(51) Int. Cl.: G05D 1/00, G01C 21/34, G06Q 50/00

(54) **VERFAHREN ZUR KOORDINATION EINER AUTONOMEN FAHRZEUGFLOTTE, SOWIE FAHRZEUGFLOTTENKOORDINIERUNGSSYSTEM**
METHOD FOR COORDINATING AN AUTONOMOUS VEHICLE FLEET, AND VEHICLE FLEET COORDINATION SYSTEM
PROCÉDÉ DE COORDINATION D'UNE FLOTTE DE VÉHICULES AUTONOME, ET SYSTÈME DE COORDINATION DE FLOTTE DE VÉHICULES

(30) Priorität: 08.07.2019 DE 102019004753
(43) Veröffentlichungstag der Anmeldung: 18.05.2022
(73) Patentinhaber: Mercedes-Benz Group AG, 70372 Stuttgart (DE)
(72) Erfinder: WOLTERMANN, Bernd, 70736 Fellbach (DE)
(74) Vertreter: Novagraaf Group
(86) Internationale Anmeldenummer: PCT/EP2020/068517
(87) Internationale Veröffentlichungsnummer: WO 2021/004856

(56) Entgegenhaltungen:
- US-A1- 2016 335 576
- US-A1- 2018 197 071
- US-A1- 2018 209 803
- US-A1- 2019 197 798

## Beschreibung

Die Erfindung betrifft ein Verfahren zur Koordination einer autonomen Fahrzeugflotte mit einer Vielzahl von autonomen Kraftfahrzeugen in einer vorgegebenen ersten Region mittels eines Fahrzeugflottenkoordinierunssystems gemäß dem Oberbegriff von Patentanspruch 1. Ferner betrifft die Erfindung ein Fahrzeugflottenkoordinierunssystem.

Es ist bekannt, dass autonome Kraftfahrzeuge, insbesondere sogenannte autonome Shuttles für "Ride-Sharing" oder "Ride-Hailing", am Anfang einer Installation dieser Fahrzeuge in gewissen Städten nur zu geringen Stückzahlen zur Verfügung stehen. Dies liegt unter anderem an der Komplexität der Kraftfahrzeuge, aber auch den hohen Kosten einer jeweiligen Sensorik und der weiteren Technik. Das heißt insbesondere, dass diese Kraftfahrzeuge nur wenig Standzeiten haben sollten und möglichst durchgängig mit mehreren Fahrgästen unterwegs sein sollten. Jedoch sind die Planung zur Ladestrategie der Kraftfahrzeuge aber auch die Fahrtrouten entsprechend anzupassen.

Hierzu ist aus dem Stand der Technik bekannt, dass die tägliche Benutzung der Vielzahl von Fahrgästen vorhergesagt werden kann, zu welcher Zeit und zu welchem Ort eine besonders hohe Nachfrage sein wird. Beispielsweise kann bestimmt werden, dass zu bestimmten Zeiten, insbesondere nachmittags, beispielsweise an einer großen Fabrik beziehungweise einem großen Unternehmen, eine Vielzahl von möglichen Personen aufzufinden ist, welche das autonome Shuttle nutzen wollen. Außerhalb dieser regelmäßigen Termine ist eine Vorhersage jedoch kompliziert.

Die US 2018/0096606 A1 offenbart ein Verfahren zum Bereitstellen von Dispositionsdiensten für einen On-Demand-Transport. Das Verfahren beinhaltet das Bestimmen, dass eine prädiktive Zuweisungsnachricht an ein Kraftfahrzeug übertragen werden soll, das Erzeugen der prädiktiven Zuweisungsnachricht als Reaktion auf das Bestimmen, dass eine prädiktive Zuweisung an ein Kraftfahrzeug übertragen werden soll und das Übertragen der prädiktiven Zuweisungsnachricht an das Fahrzeug. Das Erzeugen der prädiktiven Zuweisungsmeldung verwendet ein oder mehrere Vorhersagemodelle, die aus historischen und Echtzeit-On-Demand-Transportservicedaten berechnet werden.

Die US 2018/197 071 A1 beschreibt Ausführungsformen zur Minimierung der Wartezeit für einen Fahrer nach dem Senden einer Fahrtanforderung für ein Fahrzeug. Ein beispielhaftes computerimplementiertes Verfahren umfasst den Empfang einer Fahranfrage, wobei die Anfrage eine Fahrt von einem Startort zu einer Zone in einer geografischen Region während eines bestimmten Zeitfensters betrifft. Das Verfahren umfasst ferner die Vorhersage des Reisebedarfs auf der Grundlage einer Anzahl von Fahranfragen in der Zone während des angegebenen Zeitfensters. Das Verfahren umfasst ferner die Anforderung des Transports eines oder mehrerer Fahrzeuge in die Zone als Reaktion auf die vorhergesagte Anzahl von Fahrtwünschen, wenn vorhergesagt wird, dass der Fahrtwunsch die Anzahl der Fahrzeuge in der Zone während des festgelegten Zeitfensters übersteigt.

US 2019/197 798 A1 beschreibt ein Computersystem erstellend eine Vorhersage von Anforderungen für autonome Fahrzeuge in einer Flotte von kollektiv verwalteten autonomen Fahrzeugen auf der Grundlage eines aktuellen Zustands und eines zukünftigen Ereignisses, wobei die Vorhersage einen vorhergesagten Anforderungsgrad und eine vorhergesagte Dauer des Anforderungsgrads umfasst. Das System kann Statusinformationen von Flottenfahrzeugen empfangen und ein Fahrzeug identifizieren, das eine Wartung benötigt. Das System kann Statusinformationen von Servicezentren empfangen und ein Servicezentrum für die Wartung des Fahrzeugs identifizieren. Das System kann auf der Grundlage der erzeugten Vorhersage von Anforderungen einen Zeitpunkt bestimmen, zu dem das Fahrzeug in dem identifizierten Servicezentrum gewartet werden soll, das Fahrzeug für die Wartung in dem identifizierten Servicezentrum zu dem bestimmten Zeitpunkt einplanen und das Fahrzeug anweisen, zu dem Servicezentrum zu fahren, um zu dem bestimmten Zeitpunkt gewartet zu werden. In bestimmten Ausführungsformen kann die Vorhersage der Anforderungen durch maschinelles Lernen erstellt werden.

US 2018/209 803 A1 beschreibt ein automatisiertes Ridesharing-Abfertigungssystem umfassend eine Kommunikationsschnittstelle, die so konfiguriert ist, dass sie Fahrtwünsche empfängt, wobei jeder Fahrtwunsch einen Startpunkt und ein gewünschtes Ziel enthält, und dass sie von einem mobilen Kommunikationsgerät, das mit einem Ridesharing-Fahrzeug verbunden ist, einen aktuellen Standort des Ridesharing-Fahrzeugs empfängt. Das System umfasst auch mindestens einen Prozessor, der so konfiguriert ist, dass er das Mitfahrfahrzeug schickt, um die mehreren Benutzer abzuholen, und auf der Grundlage einer bekannten Fahrgastkapazität des Mitfahrfahrzeugs einen Kapazitätsstatus des Mitfahrfahrzeugs bestimmt. Wenn der Kapazitätsstatus unter einem Kapazitätsschwellenwert liegt, leitet der Prozessor das Ridesharing-Fahrzeug entlang einer ersten Route, und wenn der Kapazitätsschwellenwert erreicht ist, leitet er das Ridesharing-Fahrzeug entlang einer zweiten Route.

Aufgabe der vorliegenden Erfindung ist es, ein Verfahren sowie ein Fahrzeugflottenkoordinierunssystem zu schaffen, mittels welchem die autonomen Kraftfahrzeuge verbessert koordiniert werden können.

Diese Aufgabe wird durch ein Verfahren sowie durch Fahrzeugflottenkoordinierunssystem gemäß den unabhängigen Patentansprüchen gelöst. Vorteilhafte Ausgestaltungsformen sind in den Unteransprüchen angegeben.

Ein Aspekt der Erfindung betrifft ein Verfahren zur Koordination einer autonomen Fahrzeugflotte mit einer Vielzahl von autonomen Kraftfahrzeugen in einer vorgegebenen ersten Region mittels eines Fahrzeugflottenkoordinierunssystems, bei welchem in Abhängigkeit eines ersten regionalen Umgebungsprofils der ersten Region für das Fahrzeugflottenkoordinierunssystem die Fahrzeugflotte koordiniert wird, wobei zur Koordination eine jeweilige von dem regionalen Umgebungsprofil abhängige Position in der ersten Region mittels eines jeweiligen Kraftfahrzeugs der Vielzahl von Kraftfahrzeugen autonom angefahren wird.

Es ist vorgesehen, dass das erste regionale Umgebungsprofil auf Basis eines in einer elektronischen Recheneinrichtung des Fahrzeugflottenkoordinierunssystems abgespeicherten zweiten regionalen Umgebungsprofils erzeugt wird, welches für eine von der ersten Region unabhängige zweite Region erzeugt ist.

Dadurch ist es ermöglicht, dass eine verbesserte Koordination der autonomen Kraftfahrzeuge der autonomen Fahrzeugflotte durchgeführt werden kann.

Dies hat insbesondere den Hintergrund darin, dass beispielsweise in der zweiten Region ähnlichen Veranstaltungen stattfinden wie in der ersten Region. Als jeweilige Region kann eine jeweilige Stadt angesehen werden. Beispielsweise kann vorgesehen sein, dass als zweite Region die Stadt Berlin angesehen werden kann und als erste Region die Stadt Stuttgart. Somit ist vorgesehen, dass auf Basis des erzeugten Umgebungsprofils für Berlin nun das Umgebungsprofil für die Stadt Stuttgart erzeugt wird. Insbesondere, wenn in Stuttgart beispielsweise die autonome Fahrzeugflotte ausgerollt werden soll, so werden dann auf Basis des bereits erzeugten Umgebungsprofils für Berlin entsprechende Attribute vorgegeben, mit denen das regionale Umgebungsprofil abgefahren werden kann. Insbesondere ist das Umgebungsprofil durch entsprechende Veranstaltungen innerhalb der Regionen charakterisiert. Insbesondere weisen die Veranstaltungen eine Position auf, die dann entsprechend durch ein jeweiliges autonomes Kraftfahrzeug angefahren wird.

Insbesondere wird somit erfindungsgemäß gelöst, dass in der ersten Region es beispielsweise täglich eine Vielzahl von Veranstaltungen an verschiedenen Orten, mit anderen Worten Positionen, gibt, aber nur ein Teil dieser Veranstaltungen wird zu einer großen Anzahl von Fahraufträgen für die autonome Fahrzeugflotte führen. Diese Erteilung der Fahraufträge ist im Wesentlichen vom Ort der Veranstaltung, Zeit, aber auch hauptsächlich von den entsprechenden Personen abhängig. Beispielsweise ist nach einem Pop-Konzert aufgrund der Altersdurchmischung die Wahrscheinlichkeit höher, dass die autonome Fahrzeugflotte genutzt wird als nach einem klassischen Konzert.

Ferner ist vorgesehen, dass eine Routenplanung der jeweiligen Kraftfahrzeuge und/oder eine Batterieladungsplanung der jeweiligen Kraftfahrzeuge und/oder eine Standzeitenplanung der jeweiligen Kraftfahrzeuge als Koordination mittels der elektronischen Recheneinrichtung durchgeführt wird. Insbesondere ist es für eine verbesserte Koordination der autonomen Fahrzeugflotte notwendig, dass eine entsprechende Routenplanung und/oder eine Batterieladungsplanung und/oder eine Standzeitenplanung durchgeführt wird. Somit können beispielsweise Standzeiten der autonomen Kraftfahrzeuge reduziert werden. Durch die Berücksichtigung beziehungweise entsprechende Planung kann dann eine verbesserte Koordination der autonomen Fahrzeugflotte realisiert werden.

Ferner werden in Abhängigkeit des erzeugten ersten Umgebungsprofils angeforderte Fahrten von Personen abgelehnt. Insbesondere kann dazu vorgesehen sein, dass bei der Planung der entsprechenden Fahrten auch Fahrten abgelehnt werden können, wenn diese beispielsweise dafür sorgen würden, dass die notwendige Flottengröße am Veranstaltungsort zu einer bestimmten Uhrzeit nicht erreicht wird. Alternativ oder ergänzend könnten im Fall von "Ride-Sharing" größere Gebiete erstellte werden, aus denen Kunden abgeholt und abgesetzt werden, um weniger Kraftfahrzeuge einsetzen zu müssen. Dadurch kann eine verbesserte Koordination der autonomen Fahrzeugflotte realisiert werden.

Gemäß einer vorteilhaften Ausgestaltungsform wird das erste regionale Umgebungsprofil auf Basis einer Vielzahl von abgespeicherten weiteren regionalen Umgebungsprofilen erzeugt, welche für eine Vielzahl von von der ersten Region unabhängigen weiteren Regionen erzeugt ist. Mit anderen Worten wird das regionale Umgebungsprofil in Abhängigkeit von einer Vielzahl von weiteren regionalen Umgebungsprofilen, die bereits erzeugt sind, erzeugt. Dadurch ist es ermöglicht, dass auf eine Vielzahl bereits erzeugter Umgebungsprofile zurückgegriffen werden kann, wodurch ein bereits sehr detailreiches regionales Umgebungsprofil erzeugt werden kann. Dadurch ist es ermöglicht, dass bereits zu Beginn einer Dienstleistungsaufnahme der autonomen Fahrzeugflotte eine zuverlässige Koordination der autonomen Kraftfahrzeuge realisiert werden kann.

In einer weiteren vorteilhaften Ausgestaltungsform wird das erste regionale Umgebungsprofil in Abhängigkeit von regionalen Ereignissen in der ersten Region angepasst. Mit anderen Worten ist vorgesehen, dass das erste regionale Umgebungsprofil auf Basis des zumindest zweiten regionalen Umgebungsprofils erzeugt wird. Im Laufe der Zeit wird das erste regionale Umgebungsprofil dann in Abhängigkeit von den regionalen Ereignissen in der ersten Region entsprechend angepasst. Insbesondere kann vorgesehen sein, dass Informationen für diese Ereignisse beispielsweise aus dem Internet gezogen werden können. Bei den regionalen Ereignissen kann es sich insbesondere um Veranstaltungen handeln, welche typischerweise gesammelt werden und die beispielsweise im Internet zur Verfügung stehen, beispielsweise in einem Veranstaltungskalender, und die über die elektronische Recheneinrichtung dann durchsucht werden können. Wenn in der ersten Region dann die autonome Fahrzeugflotte ausgerollt wird, kann zunächst auf die Daten des zweiten regionalen Umgebungsprofils zurückgegriffen werden oder alternativ auch manuell zugeordnete Attribute vorgegeben werden, mit denen die Veranstaltungen, mit anderen Worten die regionalen Ereignisse, markiert werden, und auf diesen Attributen können dann die autonomen Kraftfahrzeuge vorgeplant in die Nähe der Veranstaltungsorte, mit anderen Worten in die Position, geführt werden. Über die tatsächlich eingehenden Fahraufträge und die dazu passenden Positionen können dann für diese erste Region die tatsächliche Prägung bezüglich Veranstaltungen gelernt und damit auch die typischen Nutzer von Shuttles zu den für sie typischen Veranstaltungen zugeordnet werden. Dadurch kann präzise das erste Umgebungsprofil erzeugt werden, was zu einer verbesserten Koordination der autonomen Fahrzeugflotte führt.

Ferner hat es sich als vorteilhaft erwiesen, wenn das erste regionale Umgebungsprofil zeitlich und/oder örtlich in Abhängigkeit der regionalen Ereignisse angepasst wird. Mit anderen Worten findet insbesondere eine spatiotemporale Anpassung des regionalen Umgebungsprofils statt. Insbesondere kann dadurch für die erste Region eine Prägung bezüglich der Veranstaltungen durchgeführt werden. Das erste regionale Umgebungsprofil wird somit zeitlich und/oder örtlich an die in der ersten Region stattfindenden Ereignisse angepasst, wodurch dann das erste regionale Umgebungsprofil angepasst werden kann. Insbesondere ist es dadurch ermöglicht, dass an die erste Region angepasst die Koordination der autonomen Fahrzeugflotte durchgeführt werden kann.

In einer weiteren vorteilhaften Ausgestaltungsform wird das erste regionale Umgebungsprofil in Abhängigkeit einer jeweiligen Zeitdauer der regionalen Ereignisse angepasst. Mit anderen Worten kann vorgesehen sein, dass typische Veranstaltungslängen der Ereignisse mittels der elektronischen Recheneinrichtung "gelernt" werden. Beispielsweise weist eine Veranstaltung regelmäßig zwei Stunden auf. Der Nutzer des autonomen Kraftfahrzeugs geben also zwei Stunden nach Veranstaltungsbeginn ihren Fahrauftrag heraus und wollen möglichst schnell abgeholt werden. Durch die entsprechende Nutzung der Zeitdauer kann somit das erste regionale Umgebungsprofil präzise erzeugt werden. Dies führt zu einer verbesserten Koordination der autonomen Fahrzeugflotte in der ersten Region.

In einer weiteren vorteilhaften Ausgestaltungsform werden für die jeweiligen regionalen Ereignisse jeweilige Personenprofile mittels der elektronischen Recheneinrichtung erzeugt, und in Abhängigkeit der erzeugten Personenprofile wird das erste Umgebungsprofil angepasst. Insbesondere kann das Personenprofil beispielsweise einen Altersdurchschnitt eines Ereignisses berücksichtigen. Des Weiteren kann beispielsweise vorgesehen sein, dass das Ereignis, beispielsweise ein Fußballspiel, dahingehend mit dem Personenprofil ausgewertet wird, dass nach dem Fußballspiel regelmäßig die Personen zum Hauptbahnhof der jeweiligen ersten Region fahren wollen.

Dies kann dann berücksichtigt werden, um die Koordination der autonomen Fahrzeugflotte realisieren zu können.

Ebenfalls vorteilhaft ist, wenn mittels eines maschinellen Lernens, insbesondere mittels eines neuronalen Netzwerks, der elektronischen Recheneinrichtung das erste Umgebungsprofil angepasst wird. Mit anderen Worten ist vorgesehen, dass die elektronische Recheneinrichtung angelernt wird und durch den Anlernprozess das erste Umgebungsprofil aktiv in Echtzeit anpasst wird. Dadurch ist es ermöglicht, dass auch zukünftig an die aktuellen Ereignisse innerhalb der ersten Region das erste regionale Umgebungsprofil angepasst wird, wodurch eine verbesserte Koordination der Fahrzeugflotte ermöglicht ist.

Ein weiterer Aspekt der Erfindung betrifft ein Fahrzeugflottenkoordinierunssystem zur Koordination einer autonomen Fahrzeugflotte mit einer Vielzahl von autonomen Kraftfahrzeugen in einer vorgegebenen ersten Region mit zumindest einer elektronischen Recheneinrichtung, wobei das Fahrzeugflottenkoordinierunssystem zum Durchführen eines Verfahrens nach dem vorhergehenden Aspekt ausgebildet ist. Insbesondere wird das Verfahren mittels des Fahrzeugflottenkoordinierunssystems durchgeführt.

Vorteilhafte Ausgestaltungsformen des Verfahrens sind als vorteilhafte Ausgestaltungsformen des Fahrzeugflottenkoordinierunssystems anzusehen. Das Fahrzeugflottenkoordinierunssystem weist dazu gegenständliche Merkmale auf, welche eine Durchführung des Verfahrens oder eine vorteilhafte Ausgestaltungsform davon ermöglichen.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt die einzige Figur eine schematische Seitenansicht einer Ausführungsform eines Fahrzeugflottenkoordinierunssystems.

In der Figur sind gleiche oder funktionsgleiche Elemente mit den gleichen Bezugszeichen versehen.

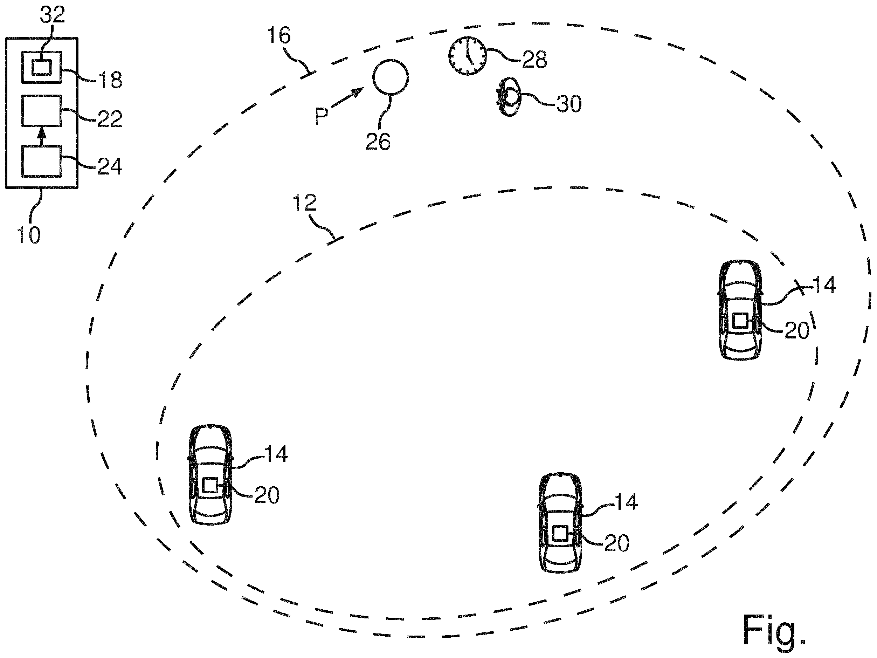

Fig. 1 zeigt in einer schematischen Seitenansicht eine Ausführungsform eines Fahrzeugflottenkoordinierunssystems 10. Das Fahrzeugflottenkoordinierunssystem 10 ist zur Koordination einer autonomen Fahrzeugflotte 12 mit einer Vielzahl von autonomen Kraftfahrzeugen 14 in einer vorgegebenen ersten Region 16 ausgebildet. Das Fahrzeugflottenkoordinierunssystem 10 weist zumindest eine elektronische Recheneinrichtung 18 auf. Ferner kann beispielsweise vorgesehen sein, dass ein jeweiliges autonomes Kraftfahrzeug 14 einen jeweiligen elektrischen Energiespeicher 20, welcher auch als Batterie bezeichnet werden kann, aufweist. Mit anderen Worten kann vorgesehen sein, dass es sich bei dem autonomen Kraftfahrzeug 14 um ein zumindest teilweise elektrisch betriebenes Kraftfahrzeug 14, insbesondere um ein voll elektrisch betriebenes autonomes Kraftfahrzeug 14, handelt.

Beim Verfahren zur Koordination der autonomen Fahrzeugflotte 12 mit der Vielzahl von autonomen Kraftfahrzeugen 14, welche vorliegend insbesondere drei autonome Kraftfahrzeuge 14 aufweist, wird in der vorgegebenen ersten Region 16 mittels des Fahrzeugflottenkoordinierunssystems 10 in Abhängigkeit eines ersten regionalen Umgebungsprofils 22 der ersten Region 16 für das Fahrzeugflottenkoordinierunssystem 10 die autonome Fahrzeugflotte 12 koordiniert, wobei zur Koordination eine jeweilige von dem regionalen Umgebungsprofil 22 abhängige Position P in der ersten Region 16 mittels eines jeweiligen autonomen Kraftfahrzeugs 14 der Vielzahl von autonomen Kraftfahrzeugen 14 autonom angefahren wird.

Es ist vorgesehen, dass das erste regionale Umgebungsprofil 22 auf Basis eines in der elektronischen Recheneinrichtung 18 des Fahrzeugflottenkoordinierunssystems 10 abgespeicherten zweiten regionalen Umgebungsprofils 24 erzeugt wird, welches für eine von der ersten Region 16 unabhängige zweite Region erzeugt ist.

Bei der ersten Region handelt es sich insbesondere um eine erste Stadt, und bei der zweiten Region handelt es sich insbesondere um eine von der ersten Stadt unabhängige zweite Stadt. Es ist ferner selbstverständlich, dass auch mehr als drei autonome Kraftfahrzeuge 14 koordiniert werden können.

Insbesondere kann vorgesehen sein, dass das erste regionale Umgebungsprofil 22 auf Basis von einer Vielzahl von abgespeicherten weiteren regionalen Umgebungsprofilen erzeugt wird, welche für eine Vielzahl von von der ersten Region 16 unabhängigen weiteren Regionen erzeugt wird.

Des Weiteren kann insbesondere vorgesehen sein, dass das erste regionale Umgebungsprofil 22 in Abhängigkeit von regionalen Ereignissen 26 in der ersten Region 16 angepasst wird. Bei den regionalen Ereignissen 26 handelt es sich insbesondere um Veranstaltungen innerhalb der ersten Region 16. Diese regionalen Ereignisse 26 können beispielsweise durch das Auswerten eines Veranstaltungskalenders für die erste Region 16 bestimmt werden.

Des Weiteren kann vorgesehen sein, dass das erste regionale Umgebungsprofil 22 zeitlich und/oder örtlich in Abhängigkeit der regionalen Ereignisse 26 angepasst wird. Insbesondere kann somit eine spatiotemporale Anpassung des ersten regionalen Umgebungsprofils 22 durchgeführt werden.

Des Weiteren kann vorgesehen sein, dass das erste regionale Umgebungsprofil 22 in Abhängigkeit einer jeweiligen Zeitdauer 28 der regionalen Ereignisse 26 angepasst wird.

Ferner kann vorgesehen sein, dass für die jeweiligen regionalen Ereignisse 26 jeweilige Personenprofile 30 mit der elektronischen Recheneinrichtung 18 erzeugt werden, und in Abhängigkeit der erzeugten Personenprofile 30 das erste regionale Umgebungsprofil 22 angepasst wird.

Insbesondere kann hierzu vorgesehen sein, dass eine Routenplanung der jeweiligen autonomen Kraftfahrzeuge 14 und/oder eine Batterieladungsplanung der jeweiligen autonomen Kraftfahrzeug 14, insbesondere einer Batterieladungsspannung der jeweiligen elektrischen Energiespeicher 20, und/oder eine Standzeitenplanung der jeweiligen autonomen Kraftfahrzeuge 14 als Koordination mittels der elektronischen Recheneinrichtung 18 durchgeführt werden.

Ferner kann insbesondere vorgesehen sein, dass in Abhängigkeit des erzeugten ersten regionalen Umgebungsprofils 22 angeforderte Fahrten von Personen abgelehnt werden.

Des Weiteren kann vorgesehen sein, dass mittels eines maschinellen Lernens, insbesondere mittels eines neuronalen Netzwerks 32, der elektronischen Recheneinrichtung 18 das erste regionale Umgebungsprofil 22 angepasst wird.

Insbesondere macht sich die Erfindung zunutze, dass in einer Stadt, welche in diesem Fall der ersten Region 16 entspricht, es jeden Tag eine Vielzahl von Ereignissen 26, welche auch als Veranstaltung bezeichnet werden können, an verschiedenen Orten, insbesondere an verschiedenen Positionen P, stattfindet, aber nur ein Teil dieser Ereignisse 26 wird zu einer großen Anzahl von Fahraufträgen für die autonome Fahrzeugflotte 12 führen. Diese sind vom Ort des Ereignisses 26, von der Zeit, aber hauptsächlich auch von den Personen abhängig. Zum Beispiel ist nach einem Pop-Konzert aufgrund der Altersdurchmischung sehr wahrscheinlich eine höhere Anzahl von Fahraufträgen für die autonome Fahrzeugflotte 12 zu verzeichnen als nach einem klassischen Konzert.

Diese Ereignisse können typischerweise gesammelt werden und stehen im Internet zur Verfügung und können über beispielsweise die elektronische Recheneinrichtung 18 durchsucht werden. Wenn in einer neuen Stadt, in diesem Fall der ersten Region 16, die autonome Fahrzeugflotte 12 ausgerollt werden soll, werden die Daten auf Basis anderer Städte, also der zweiten Region, und das dazugehörige zweite regionale Umgebungsprofil 24 genutzt. Alternativ kann auch eine manuelle Eingabe von Daten erfolgen. Die entsprechenden Ereignisse 26 werden dann markiert, und auf diesen Attributen können dann die autonomen Kraftfahrzeuge 14 vorgeplant in die Nähe der Veranstaltungsorte geführt werden. Über die tatsächlich eingehenden Buchungen und die dazu passenden Abholorte kann dann für diese Stadt die tatsächliche Prägung bezüglich der Veranstaltungen gelernt werden und damit auch die typischen Nutzer von der autonome Fahrzeugflotte 12 zu den für sie typischen Veranstaltungen zugeordnet werden. Zusätzlich können auch typische Veranstaltungslängen gelernt werden. Beispielsweise weist ein bestimmtes Theaterstück eine Zeitdauer 28 von zwei Stunden auf, so dass für die elektronische Recheneinrichtung 18 bekannt ist, dass zwei Stunden nach Veranstaltungsbeginn entsprechende Fahraufträge eingehen, welche möglichst schnell abgearbeitet werden sollten. Zusätzlich kann über das Fahrziel dann auch gelernt werden, wohin der typische Kunde einer solchen Veranstaltung gefahren werden möchte. Beispielsweise kann vorgesehen sein, dass nach einem Fußballspiel häufig die jeweilige Person zum Hauptbahnhof der ersten Region 16 gefahren werden möchte. Dieses Wissen kann wieder für die weitere Einplanung der autonomen Fahrzeugflotte 12 verwendet werden.

Über diese persönlichen Vorlieben der typischen autonomen Kraftfahrzeugnutzer kann dann die autonome Fahrzeugflotte 12 so positioniert werden, dass die Fahrten vorher geplant werden, aber auch die Planung bezüglich der Batterieladung der Kraftfahrzeuge 14 und damit notwendige Standzeiten verbessert werden.

Bei der Planung der Fahrten können dabei auch Fahrten abgelehnt werden, wenn diese dafür sorgen würden, dass die notwendige Flottengröße am Veranstaltungsort, also am Ereignis 26, zu einer bestimmten Uhrzeit nicht erreicht wird. Alternativ oder ergänzend könnten im Fall von "Ride-Sharing" größere Gebiete erstellt werden, aus denen die Kunden abgeholt und abgesetzt werden, um weniger autonome Kraftfahrzeuge 14 einsetzen zu müssen.

Insgesamt zeigt die Erfindung eine automatische Positionierung von autonomen Kraftfahrzeugen 14.

## Patentansprüche

1. Verfahren zur Koordination einer autonomen Fahrzeugflotte (12) mit einer Vielzahl von autonomen Kraftfahrzeugen (14) in einer vorgegebenen ersten Region (16) mittels eines Fahrzeugflottenkoordinierunssystems (10), bei welchem in Abhängigkeit eines ersten regionalen Umgebungsprofils (22) der ersten Region (16) für das Fahrzeugflottenkoordinierunssystem (10) die autonome Fahrzeugflotte (12) koordiniert wird, wobei zur Koordination eine jeweilige von dem regionalen Umgebungsprofil (22) abhängige Position (P) in der ersten Region (16) mittels eines jeweiligen autonomen Kraftfahrzeugs (14) der Vielzahl von autonomen Kraftfahrzeugen (14) autonom angefahren wird,
**dadurch gekennzeichnet, dass**
das erste regionale Umgebungsprofil (22) auf Basis eines in einer elektronischen Recheneinrichtung (18) des Fahrzeugflottenkoordinierunssystems (10) abgespeicherten zweiten regionalen Umgebungsprofils (24) erzeugt wird, welches für eine von der ersten Region (16) unabhängige zweite Region erzeugt ist, wobei eine Routenplanung der jeweiligen autonomen Kraftfahrzeuge (14) und/oder eine Batterieladungsplanung der jeweiligen autonomen Kraftfahrzeuge (14) und/oder eine Standzeitenplanung der jeweiligen autonomen Kraftfahrzeuge (14) als Koordination mittels der elektronischen Recheneinrichtung (18) durchgeführt werden, und wobei in Abhängigkeit des erzeugten ersten regionalen Umgebungsprofils (22) angeforderte Fahrten von Personen abgelehnt werden, und wobei die erste Region (16) eine erste Stadt ist und die zweite Region eine zur ersten Stadt unterschiedliche zweite Stadt ist, das erste regionale Umgebungsprofil (22) in Abhängigkeit von regionalen Ereignissen (26) in der ersten Region (16) angepasst wird, wobei durch die ersten und zweiten Umgebungsprofile (22, 24) den Arten der regionalen Ereignissen eine Information über den regionalen Ereignissen entsprechende Anzahl oder Ziele der angeforderten Fahrten zugeordnet wird.

2. Verfahren nach Anspruch 1,
**dadurch gekennzeichnet, dass**
das erste regionale Umgebungsprofil (22) auf Basis einer Vielzahl von abgespeicherten weiteren regionalen Umgebungsprofilen erzeugt wird, welche für eine Vielzahl von der ersten Region (16) unabhängigen weiteren Regionen erzeugt ist.

3. Verfahren nach einem der vorhergehenden Ansprüche,
**dadurch gekennzeichnet, dass**
das erste regionale Umgebungsprofil (22) zeitlich und/oder örtlich in Abhängigkeit der regionalen Ereignisse (26) angepasst wird.

4. Verfahren nach einem der vorhergehenden Ansprüche,
**dadurch gekennzeichnet, dass**
das erste regionale Umgebungsprofil (22) in Abhängigkeit einer jeweiligen Zeitdauer (28) der regionalen Ereignisse (26) angepasst wird.

5. Verfahren nach einem der vorhergehenden Ansprüche,
**dadurch gekennzeichnet, dass**
für die jeweiligen regionalen Ereignisse (26) jeweilige Personenprofile (30) mittels der elektronischen Recheneinrichtung (18) erzeugt werden, und in Abhängigkeit der erzeugten Personenprofile (30) das erste regionale Umgebungsprofil (22) angepasst wird.

6. Verfahren nach einem der vorhergehenden Ansprüche,
**dadurch gekennzeichnet, dass**
mittels eines maschinellen Lernens, insbesondere mittels eines neuronalen Netzwerks (32), der elektronischen Recheneinrichtung (18) das erste regionale Umgebungsprofil (22) angepasst wird.

7. Fahrzeugflottenkoordinierunssystem (10) zur Koordination einer autonomen Fahrzeugflotte (12) mit einer Vielzahl von autonomen Kraftfahrzeugen (14) in einer vorgegebenen ersten Region (16), mit zumindest einer elektronischen Recheneinrichtung (18), wobei das Fahrzeugflottenkoordinierunssystem (10) zum Durchführen eines Verfahrens nach einem der Ansprüche 1 bis 6 ausgebildet ist.

## Claims

1. Method for coordinating an autonomous vehicle fleet (12) having a plurality of autonomous motor vehicles (14) in a predetermined first region (16) by means of a vehicle fleet coordination system (10), in which method the autonomous vehicle fleet (12) is coordinated depending on a first regional environment profile (22) of the first region (16) for the vehicle fleet coordination system (10), wherein, for coordination, a relevant position (P) in the first region (16), which position is dependent on the regional environment profile (22), is approached autonomously by means of a relevant autonomous motor vehicle (14) of the plurality of autonomous motor vehicles (14),
**characterized in that**
the first regional environment profile (22) is generated on the basis of a second regional environment profile (24), which is stored in an electronic computing device (18) of the vehicle fleet coordination system (10) and which is generated for a second region independent of the first region (16), wherein route planning of the autonomous motor vehicles (14) and/or battery charge planning of the autonomous motor vehicles (14) and/or idle time planning of the autonomous motor vehicles (14) are carried out as coordination by means of the electronic computing device (18), and wherein journeys requested by people are rejected depending on the generated first regional environment profile (22), and wherein the first region (16) is a first city and the second region is a second city that is different from the first city, the first regional environment profile (22) is adapted depending on regional events (26) in the first region (16), wherein information regarding the number or destinations of the requested journeys corresponding to the regional events is assigned to the types of regional events by the first and second environment profiles (22, 24).

2. Method according to claim 1,
**characterized in that**
the first regional environment profile (22) is generated on the basis of a plurality of stored further regional environment profiles which are generated for a plurality of further regions independent of the first region (16).

3. Method according to any of the preceding claims,
**characterized in that**
the first regional environment profile (22) is adapted temporally and/or locally depending on the regional events (26).

4. Method according to any of the preceding claims,
**characterized in that**
the first regional environment profile (22) is adapted depending on a relevant time duration (28) of the regional events (26).

5. Method according to any of the preceding claims,
**characterized in that**
person profiles (30) are generated for the relevant regional events (26) by means of the electronic computing device (18), and the first regional environment profile (22) is adapted depending on the generated person profiles (30).

6. Method according to any of the preceding claims,
**characterized in that**
the first regional environment profile (22) is adapted to the electronic computing device (18) by means of machine learning, in particular by means of a neural network (32).

7. Vehicle fleet coordination system (10) for coordinating an autonomous vehicle fleet (12) having a plurality of autonomous motor vehicles (14) in a predetermined first region (16), comprising at least one electronic computing device (18), wherein the vehicle fleet coordination system (10) is designed to carry out a method according to any of claims 1 to 6.

## Revendications

1. Procédé permettant la coordination, à l'aide d'un système de coordination de flotte de véhicules (10), d'une flotte de véhicules (12) autonome comportant une pluralité de véhicules automobiles (14) autonomes dans une première région (16) prédéfinie, dans lequel la flotte de véhicules (12) autonome est coordonnée en fonction d'un premier profil d'environnement (22) régional de la première région (16) pour le système de coordination de flotte de véhicules (10), dans lequel, pour la coordination, une position (P) respective dépendant du profil d'environnement (22) régional dans la première région (16) est approchée de manière autonome à l'aide d'un véhicule automobile (14) autonome respectif de la pluralité de véhicules automobiles (14) autonomes,
**caractérisé en ce que**
le premier profil d'environnement (22) régional est généré sur la base d'un second profil d'environnement (24) régional mémorisé dans un dispositif de calcul (18) électronique du système de coordination de flotte de véhicules (10), lequel second profil d'environnement est généré pour une seconde région indépendante de la première région (16), dans lequel une planification d'itinéraire des véhicules automobiles (14) autonomes respectifs et/ou une planification de charge de batterie des véhicules automobiles (14) autonomes respectifs et/ou une planification de temps d'arrêt des véhicules automobiles (14) autonomes respectifs sont effectuées en guise de coordination à l'aide du dispositif de calcul (18) électronique, et dans lequel, en fonction du premier profil d'environnement (22) régional généré, des trajets demandés par des personnes sont rejetés, et dans lequel la première région (16) est une première ville et la seconde région est une seconde ville différente de la première ville, le premier profil d'environnement (22) régional est adapté en fonction d'événements (26) régionaux dans la première région (16), dans lequel, grâce aux premier et second profils d'environnement (22, 24), une information sur le nombre ou les destinations des trajets demandés est associée aux types d'événements régionaux, lesquels nombre ou destinations correspondent aux événements régionaux.

2. Procédé selon la revendication 1,
**caractérisé en ce que**
le premier profil d'environnement (22) régional est généré sur la base d'une pluralité d'autres profils d'environnement régionaux mémorisés, laquelle pluralité d'autres profils est générée pour une pluralité d'autres régions indépendantes de la première région (16).

3. Procédé selon l'une des revendications précédentes,
**caractérisé en ce que**
le premier profil d'environnement (22) régional est adapté dans le temps et/ou dans l'espace en fonction des événements (26) régionaux.

4. Procédé selon l'une des revendications précédentes,
**caractérisé en ce que**
le premier profil d'environnement (22) régional est adapté en fonction d'une durée (28) respective des événements (26) régionaux.

5. Procédé selon l'une des revendications précédentes,
**caractérisé en ce que**
pour les événements (26) régionaux respectifs, des profils de personnes (30) respectifs sont générés à l'aide du dispositif de calcul (18) électronique et, en fonction des profils de personnes (30) générés, le premier profil d'environnement (22) régional est adapté.

6. Procédé selon l'une des revendications précédentes,
**caractérisé en ce que**
le premier profil d'environnement (22) régional est adapté à l'aide d'un apprentissage automatique, en particulier à l'aide d'un réseau (32) neuronal, du dispositif de calcul (18) électronique.

7. Système de coordination de flotte de véhicules (10) permettant la coordination d'une flotte de véhicules (12) autonome comportant une pluralité de véhicules automobiles (14) autonomes dans une première région (16) prédéfinie, comportant au moins un dispositif de calcul (18) électronique, dans lequel le système de coordination de flotte de véhicules (10) est conçu pour la mise en oeuvre d'un procédé selon l'une des revendications 1 à 6.
